# FASCICULE DE BREVET EUROPEEN

(11) **EP 2 255 065 B1**
(45) Date de publication et mention de la délivrance du brevet: **02.09.2015**
(21) Numéro de dépôt: 09724535.1
(22) Date de dépôt: 18.02.2009
(51) Int. Cl.: E21B 43/013

(54) **MÉTHODE D'INSTALLATION DE COLONNE SOUS-MARINE MONTANTE**
VERFAHREN ZUR INSTALLATION EINES UNTERWASSER-STEIGROHRS
METHOD FOR INSTALLING A RISER

(30) Priorité: 19.02.2008 FR 0800897
(43) Date de publication de la demande: 01.12.2010
(73) Titulaire: Technip France, 92400 Courbevoix (FR)
(72) Inventeur: ESPINASSE, Philippe, F-76420 Bihorel (FR); DE KERDANET, Tegwen, F-75015 Paris (FR); FARGHEON, Louis, F-75001 Paris (FR); GUILBAUD, Thomas, F-92700 Colombes (FR)
(74) Mandataire: Bertrand, Didier
(86) Numéro de dépôt international: PCT/FR2009/000183
(87) Numéro de publication internationale: WO 2009/118467

(56) Documents cités:
- FR-A- 2 791 316

## Description

La présente invention se rapporte à une méthode d'installation de colonne sous-marine montante pour le transport offshore des hydrocarbures.

Plus précisément, l'invention concerne l'installation de colonnes montantes pour l'extraction et le transport de gaz ou de pétrole brut à partir d'une installation de fond reliée à des têtes de puits immergées, pour ensuite remonter ce gaz ou ce pétrole brut vers une installation située en surface. Ces colonnes montantes, comportent au moins une conduite verticale de liaison fond/surface, appelée "riser", et également un flotteur relié au sommet de la conduite pour la suspendre verticalement en subsurface et à l'aplomb de l'installation de fond. La conduite présente une extrémité de raccordement, destinée à être raccordée à l'installation de fond. En outre, le sommet de la conduite, est prolongé par une conduite flexible qui rejoint l'installation de surface en s'étendant en chaînette sous son propre poids. Une telle installation est déjà décrite dans le document FR 2 791 316.

Se pose alors le problème de l'installation de ces colonnes montantes. En effet, les champs pétrolifères sous-marins sont exploités à des profondeurs de plus en plus importantes, et il est alors malaisé d'installer ces colonnes montantes depuis la surface de l'eau, et notamment de guider l'extrémité de raccordement vers l'installation de fond pour les raccorder ensemble.

Ainsi, il a été imaginé d'installer un élément de connexion mâle au niveau de l'extrémité de raccordement de la conduite, et d'ancrer dans le fond marin, un élément de connexion femelle sensiblement tronconique, dans lequel l'élément de connexion mâle est apte à venir s'engager. En outre, des câbles de traction sont accrochés à l'extrémité de raccordement et sont étendus jusqu'à l'élément de connexion femelle pour être engagés dans des poulies de renvoi. Ensuite, ces câbles sont étendus jusqu'à la surface, pour être entraînés ensuite par l'intermédiaire d'un navire de surface. De la sorte, en entraînant depuis la surface les câbles de traction à travers les poulies de renvoi, on entraîne par là même et à l'inverse, l'extrémité de raccordement vers l'installation de fond et plus précisément, à l'approche du fond, l'élément mâle à l'intérieur de l'élément de connexion femelle.

On pourra se référer au document FR 2 791 316 dont l'objet est précisément une méthode d'installation d'une colonne sous-marine montante de ce type.

Toutefois, lorsque l'élément mâle vient s'engager dans l'élément femelle, pour réaliser la connexion de l'extrémité de raccordement avec l'installation de fond, il est nécessaire de tirer sur les câbles depuis la surface très lentement et avec beaucoup de précautions pour ne pas entraîner violemment l'élément mâle dans l'élément femelle et endommager l'extrémité de raccordement. Or, le navire de surface est fréquemment soumis à la houle et aux courants, ou bien même au vent, de telle sorte que, l'élément mâle est entraîné vers l'élément femelle en oscillant et il vient par conséquent le percuter lorsqu'ils sont suffisamment proches l'un de l'autre. Ce phénomène, couramment dénommé : « pilonnement » concours à endommager l'extrémité de raccordement.

Un autre inconvénient réside dans une étape préalable au raccordement de l'extrémité de raccordement et de ladite installation de fond selon laquelle on retient ledit flotteur et ladite conduite par une ligne de suspension depuis un bâtiment de surface. Le flotteur est rempli d'eau pour être immergé avec la conduite et il est retenu entre le fond et la surface, suspendu à la ligne de suspension, laquelle supporte des efforts de traction correspondant au poids dudit flotteur et de ladite conduite. Puis l'extrémité de raccordement de la conduite est amarrée sur le fond marin par des amarres à distance de l'installation de fond. Ensuite, le flotteur est délesté pour reprendre les efforts de traction correspondant à son poids et à celui de ladite conduite et de manière à maintenir la conduite en position verticale. Cependant, dès l'instant où l'intensité de l'effort subit par la ligne de suspension est reprise par les amarres, les mouvements verticaux du bâtiment de surface dus à la houle, entraîne des efforts de traction considérables sur l'ensemble allant de la ligne de suspension jusqu'aux amarres qui risquent notamment de se rompre. En outre, dans certaines conditions, les mouvements opposés du bâtiment de surface et du flotteur peuvent également conduire, compte tenu de leur inertie respective à la désolidarisation du bâtiment de surface et du flotteur.

Aussi, la présente invention vise alors à résoudre les problèmes précités pour réaliser le raccordement de l'extrémité de raccordement de la conduite à l'installation de fond.

Dans le but de résoudre ces problèmes, la présente invention propose une méthode d'installation d'une colonne sous-marine montante pour le transport des hydrocarbures entre un fond marin et une surface, ladite méthode étant du type selon laquelle : on ancre une installation de fond sur ledit fond marin ; on fournit une conduite tubulaire présentant une extrémité de raccordement destinée à être raccordée à ladite installation de fond et une extrémité opposée équipée d'un flotteur immergeable ; puis, on autorise l'entrée d'eau à l'intérieur dudit flotteur pour immerger ledit flotteur et ladite conduite tubulaire à l'aplomb de ladite installation de fond, tandis qu'on retient ledit flotteur et ladite conduite par une ligne de suspension depuis un bâtiment de surface, ladite ligne de suspension supportant des efforts de traction correspondant au poids dudit flotteur et de ladite conduite ; on fournit ensuite un câble de traction et on installe des moyens de renvoi sur ladite installation de fond de manière à pouvoir relier ledit câble de traction à ladite extrémité de raccordement et à entraîner ledit câble à travers lesdits moyens de renvoi et simultanément ladite extrémité de raccordement vers ladite installation de fond ; selon l'invention, on accroche une bouée de tirage immergée audit câble de traction pour exercer des efforts de traction supplémentaires sur ladite ligne de suspension ; ensuite on substitue un fluide gazeux à l'eau dudit flotteur pour compenser d'une part les efforts de traction correspondant au poids dudit flotteur et de ladite conduite et d'autre part, au moins une partie des efforts de traction supplémentaire ; et, enfin, on amarre ladite bouée de tirage à ladite installation de fond et on libère progressivement ladite ligne de suspension de façon que ladite installation de fond reprennent lesdits efforts de traction supplémentaires exercés par la bouée de tirage, tandis que ledit flotteur exerce ladite autre partie des efforts supplémentaires de traction sur ladite conduite pour la maintenir verticalement.

Ainsi, une caractéristique de l'invention réside dans la mise en oeuvre de la bouée de tirage immergée en subsurface, c'est-à-dire entre le fond et la surface, et plus précisément près du fond, pour l'accrocher au câble de traction puis la relâcher de manière à ce qu'en remontant, elle puisse exercer des efforts de traction supplémentaires sur ladite ligne de suspension. En effet, une fois relâchée, la bouée de tirage qui contient alors un fluide gazeux plus léger que l'eau, exerce une traction sur le câble de traction qui se répercute à l'inverse, grâce aux moyens de renvoi sur l'extrémité de raccordement de la conduite, et partant, sur la ligne de suspension qui rejoint le bâtiment de surface. Ainsi un effort de traction supplémentaire est exercé sur la ligne suspension en surplus du poids propre de la conduite et du flotteur.

Ensuite, en amarrant ladite bouée de tirage à ladite installation de fond puis en libérant ou en déroulant progressivement ladite ligne de suspension depuis le bâtiment de surface, ledit flotteur et ladite conduite tubulaire descendent progressivement vers l'installation de fond, car le câble de traction est entraîné à travers les moyens de renvoi par l'intermédiaire de la bouée de tirage qui elle est entraînée vers la surface. Cette dernière est cependant retenue, par l'amarre qui la relie à l'installation de fond. Dès cet instant, les efforts exercés sur la ligne de suspension, entre le flotteur et le bâtiment de surface, s'annulent. L'intérêt d'un tel agencement, réside précisément en ce que, dès l'instant où les efforts exercés sur la ligne de suspension tendent vers zéro, et que le bâtiment de surface, par exemple, est entraîné par la houle dans une direction verticale à l'opposé du fond marin, les efforts qui s'exercent alors sur l'ensemble de la chaîne, lignes de suspension, flotteurs, conduite et câble de traction, se répercutent alors sur la bouée de tirage qui est alors entraînée vers le fond marin. Cela permet de préserver bien évidemment, tous les éléments de l'ensemble de la chaîne précitée, puisque le câble de tirage n'est pas ancré sur le fond marin comme cela est le cas selon l'art antérieur.

Avantageusement, on substitue ledit fluide gazeux, plus léger que l'eau, à l'eau dudit flotteur pour compenser les efforts de traction correspondant au poids dudit flotteur et sensiblement à la moitié desdits efforts de traction supplémentaires exercés par l'intermédiaire de la bouée de tirage.

En outre, selon un mode particulier de mise en oeuvre de l'invention, pour raccorder l'extrémité de raccordement à ladite installation de fond, on libère ladite bouée de tirage de ladite installation de fond pour que ladite bouée de tirage remonte vers ladite surface de manière à entraîner à l'inverse, ladite extrémité de raccordement vers ladite installation de fond. Pour ce faire, on prévoit des moyens de réception amortisseurs, de l'extrémité de raccordement lorsqu'elle approche en descendant, de l'installation de fond.

Préférentiellement, on relie ladite bouée de tirage à des moyens de guidage connus pour guider la remontée de ladite bouée de tirage vers ladite surface et pour la contrôler. Ces moyens de guidages connus sont par exemple, un winch sous-marin ou treuil ou encore un corps-mort. De la sorte, le contact de l'extrémité de raccordement de la conduite et de l'installation de fond, peut être mieux contrôlé et on évite ainsi leur endommagement.

En outre, on équipe avantageusement ladite extrémité de raccordement d'un élément mâle, tandis qu'on équipe ladite installation de fond d'un élément femelle apte à recevoir ledit élément mâle.

Ainsi, le guidage de l'extrémité de raccordement par rapport à son point de raccordement sur l'installation de fond s'effectue encore plus précisément. De plus, la bouée de guidage qui est situé en subsurface est entraînée elle-même de façon contrôlée, et partant, le câble de traction peut être entraîné sans être perturbé par la houle ou par tout autre courant. Cela favorise le contrôle de la position relative de l'extrémité de raccordement et de l'installation de fond. En effet, alors que les eaux de surface sont relativement perturbées, jusqu'à une certaine profondeur, en dessous, ni la houle ni les courants n'ont beaucoup d'influence sur un corps immergé. En outre, lorsque la bouée de tirage remonte, à l'inverse, l'extrémité de raccordement est entraînée vers l'installation de fond, et partant, le flotteur solidaire de la conduite tubulaire est lui-même entraîné vers le fond et s'écarte ainsi des eaux de surface perturbées. De la sorte, il est beaucoup plus aisé de contrôler l'approche de l'extrémité de raccordement vers l'installation de fond et plus précisément, l'engagement de l'élément mâle dans l'élément femelle pour réaliser le raccordement.

Par ailleurs, et de façon particulièrement avantageuse on laisse entrer de l'eau à l'intérieur de ladite bouée de tirage pour l'immerger et on évacue l'eau de ladite bouée de tirage vers l'extérieur pour la remplacer par un fluide gazeux de manière à libérer ladite bouée de tirage pour qu'elle soit entraînée vers la surface. Ce moyen, permet d'immerger la bouée de tirage aisément avec un minimum d'efforts. Bien évidemment, pour ce faire la bouée de tirage, ou bien le navire de surface, sont équipés de pompes à cet effet.

De plus, on installe avantageusement des moyens de renvoi dudit câble formant palan sur ladite installation de fond de façon à démultiplier les efforts de traction exercée par la bouée de tirage sur l'extrémité de raccordement de la conduite et à ajuster la position relative de l'extrémité de raccordement et de l'installation de fond avec précision. En outre, selon une variante de réalisation de l'invention, on installe des organes de renvoi complémentaires solidaires d'une embase ancrée dans le fond marin et à distance de l'installation de fond, et on entraîne ledit câble de traction à la fois à travers lesdits moyens de renvoi et à travers lesdits organes de renvoi complémentaires. De la sorte, l'entraînement du câble de traction n'est nullement perturbé durant le mouvement de l'extrémité de raccordement vers l'installation de fond comme on l'expliquera ci-après plus en détail.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique de la méthode d'installation d'une colonne sous-marine montante conforme à l'invention selon une première étape d'installation;
- la Figure 2 est une vue schématique de la méthode d'installation conforme à l'invention selon une deuxième étape d'installation;
- la Figure 3 est une vue schématique de la méthode d'installation conforme à l'invention selon une troisième étape d'installation ; et,
- la Figure 4 est une vue schématique de détail d'un élément de la colonne sous-marine montante vu sur la Figure 3 ;

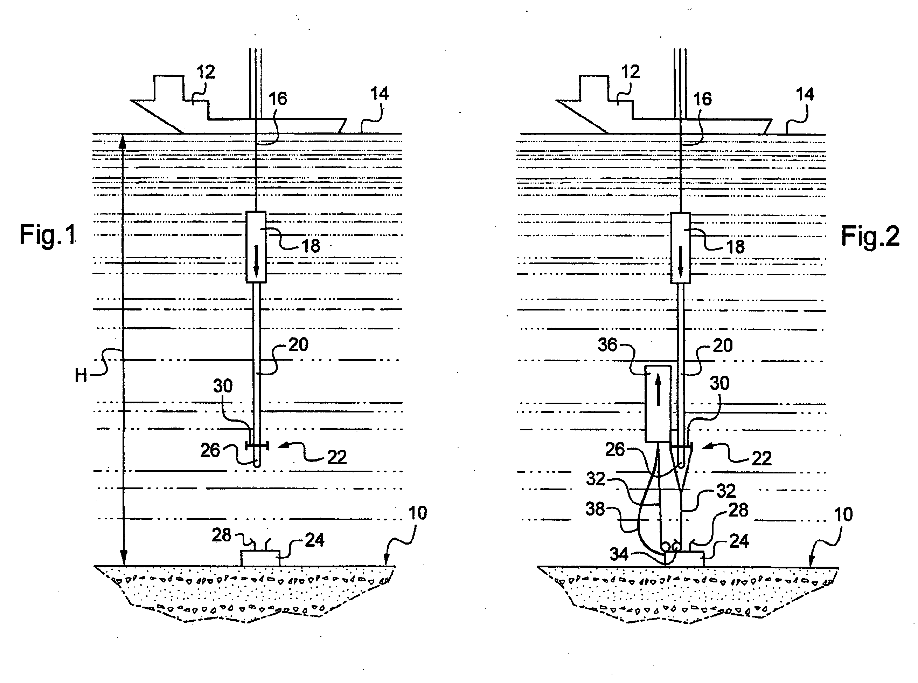

La Figure 1 illustre de manière schématique un fond marin 10 recouvert d'une hauteur d'eau H, par exemple de 2000 mètres. En outre, un bâtiment de surface 12 flotte à la surface 14 de l'eau. Le bâtiment de surface 12 présente des moyens d'entraînement en translation d'un câble de suspension 16 auquel est suspendu un flotteur 18. Une conduite tubulaire longitudinale 20 est elle-même suspendue au flotteur 18 dans le prolongement du câble de suspension 16. La conduite tubulaire longitudinale 20 présente une extrémité de raccordement 22 opposée au flotteur 18. En outre, une installation de fond 24 est ancrée sur le fond marin 10 et est par conséquent immergée. Les éléments représentés sur cette Figure 1, comme sur les autres Figures d'ailleurs, ne sont pas à l'échelle et permettront simplement d'expliquer le plus clairement possible dans la suite de la description, la méthode d'installation d'une colonne sous-marine montante conforme à l'invention. La colonne sous-marine montante comprend notamment, la conduite tubulaire longitudinale 20, dénommée également «riser » et le flotteur 18.

Le flotteur 18 de géométrie cylindrique à base circulaire d'un diamètre compris entre quatre et six mètres, par exemple cinq mètres, et d'une hauteur comprise entre 20 et 40 mètres, par exemple 35 mètres, soit entre 250 m³ et 1130 m³, est susceptible d'être rempli d'eau. Pour ce faire, le flotteur 18 comporte des vannes d'entrée non représentées, dont l'actionnement est commandable depuis le bâtiment de surface 12. De la sorte, lorsque le flotteur 18 est plongé dans l'eau à partir du bâtiment de surface 12 par l'intermédiaire du câble de suspension 16, en commandant l'ouverture des vannes d'entrée, l'eau pénètre à l'intérieur, et il est entraîné sous l'action de son propre poids vers le fond marin 10. Par ailleurs, le flotteur 18 ou le bâtiment de surface sont équipés de moyens de pompage non représentés, par exemple des pompes, pour évacuer l'eau qu'il contient après qu'il a été rempli d'eau et immergé, et surtout pour injecter de l'air sec ou de l'azote à la place de l'eau évacuée. Par exemple, les moyens de pompage sont installés sur le bâtiment de surface, et des ombilicaux relient ces moyens de pompage au flotteur. Avantageusement, le gaz est également stocké sur le bâtiment de surface 12, et il est susceptible d'être acheminé jusqu'au flotteur 18 par l'intermédiaire des ombilicaux étendus le long du câble de suspension 16. Ainsi, en évacuant l'eau du flotteur 18 et en la remplaçant par un gaz, plus léger que l'eau, le flotteur 18 est susceptible de voir sa densité globale diminuer, devenir inférieure à celle de l'eau qui l'entoure, et partant, être entraîné vers la surface. On expliquera ci-après, la mise en oeuvre de ces caractéristiques pour l'application de la méthode d'installation selon l'invention.

Par ailleurs, le flotteur 18 est donc rempli d'eau comme on l'a expliqué ci-dessus, la conduite tubulaire longitudinale 20 est elle-même remplie d'eau de manière à s'étendre sensiblement verticalement et être suspendu au flotteur 18, sensiblement à l'aplomb de l'installation de fond 24. De la sorte, le flotteur 18 et la conduite tubulaire 20 exerce alors une tension sur le câble de suspension 16 équivalent à leur propre poids, par exemple de 500000 Newton. Cela correspond sensiblement à une traction de 50 tonnes. Aussi, l'extrémité de raccordement 22 de la conduite longitudinale 20 présente à son extrémité libre, un élément mâle 26, tandis que l'installation de fond 24 présente un élément femelle 28 évasé, adapté à recevoir l'élément mâle 26 de manière à pouvoir ajuster le raccordement de l'extrémité de raccordement 22 avec l'installation de fond 24.

De plus, l'extrémité de raccordement 22 est équipée de moyens formant palonnier 30 situés en arrière de l'élément mâle 26 et permettant d'accrocher des câbles de traction 32 que l'on décrira maintenant en référence à la Figure 2. On retrouve sur cette Figure 2, l'ensemble des éléments représentés sur la Figure 1. On y retrouve en plus, des moyens de renvoi 34 des câbles de traction 32 comprenant des poulies et une bouée de tirage 36.

Cette bouée de tirage 36 est immergeable et elle comporte, tout comme le flotteur 18, des vannes d'entrée non représentées commandables depuis la surface. Elle comporte de la même façon, des moyens de pompage, par exemple des pompes non représentées, pour évacuer l'eau contenue dans la bouée de tirage, et des moyens d'injection de gaz pour remplacer l'eau évacuée. Tous ces moyens sont bien entendus commandables depuis la surface. On notera par ailleurs, que la poussée d'Archimède qui s'exerce sur la bouée de tirage 36 totalement vidée de son eau, et rempli d'air ou d'azote, est suffisamment importante, pour exercer une traction ascendante comprise entre 400 000 Newton et 800 000 Newton, par exemple de 600 000 Newton soit l'équivalent d'environ 60 tonnes. Ainsi, au préalable, la bouée de tirage 36 a été immergée depuis la surface, par exemple depuis le bâtiment de surface 12, sous l'action de son propre poids et après avoir été remplie d'eau, elle a été guidée et retenue par exemple par un câble de bouée de tirage, de manière à pouvoir être porté à l'aplomb de l'installation de fond 24 et dans son voisinage. Elle est alors reliée aux câbles de traction 32 qui s'étendent depuis le palonnier 30 de l'extrémité de raccordement 22 jusqu'à l'installation de fond 24 en traversant l'élément femelle 28 puis les poulies de renvoi 34 pour ensuite rejoindre en sens inverse la bouée de tirage 36. Avantageusement, on relie la bouée de tirage 36 et l'installation de fond 24 au moyen d'une ligne 38 d'une longueur définie. Cette ligne 38 permet, comme on l'expliquera ci-après de maintenir la bouée de tirage 36 à une distance déterminée de l'installation de fond 24. Avantageusement, la ligne 38 permet également de retenir la bouée de tirage 36, lorsqu'elle a été immergée au préalable.

Ensuite, on évacue totalement l'eau contenue dans la bouée de tirage 36 et on la remplace par un gaz, en l'espèce de l'air sec, tandis que la conduite tubulaire 20 et le flotteur 18 exercent toujours, de par leur poids global, une traction sur le câble de suspension 16. Ainsi, la bouée de tirage 36 remonte vers la surface 14 en entraînant par là même les câbles de traction 32, et partant, grâce aux poulies de renvoi 34, en exerçant sur l'extrémité de raccordement 32 et dans un sens inverse, un effort de traction supplémentaire sensiblement équivalent à 600 000 Newton. Cette traction s'ajoute à celle qui s'exerce déjà sur le câble de suspension 16 du flotteur 18 et de la conduite 20 et qui vaut ici environ 500000 Newton. Les efforts de traction totaux sont ainsi d'environ 1100000 Newton. On observera que dans cette position, la ligne 38 est lâche et ne reprend aucune tension de la bouée de tirage 36.

À partir de cette position, dans laquelle le câble de suspension 16 supporte à la fois le poids du flotteur 18 et de la conduite tubulaire 20 et aussi l'effort de traction exercée par la bouée de tirage 36 par l'intermédiaire des câbles de traction 32, on commande l'actionnement du pompage de l'eau contenue dans le flotteur 18. L'eau est ici remplacée par de l'air sec. Ainsi, on évacue par exemple 80 mètres cube d'eau du flotteur que l'on remplace par 80 mètres cube d'air. De la sorte, selon le principe d'Archimède, ces 80 mètres cube d'air correspondent une force de poussée ascensionnelle de 800 000 Newton environ, qui s'exerce sur le flotteur 18 et qui permet de reprendre l'intégralité du poids du flotteur 18 et de la conduite 20, et en plus, la moitié des 600 000 Newton exercés par la bouée de tirage 36 par l'intermédiaire du câble de traction 32, soit 300 000 Newton. Par conséquent, la force de traction qui s'exerce sur le câble de suspension 16 est d'environ 300 000 Newton et elle est due à la différence des efforts opposés exercés respectivement par le flotteur 18 et par la bouée de tirage 36.

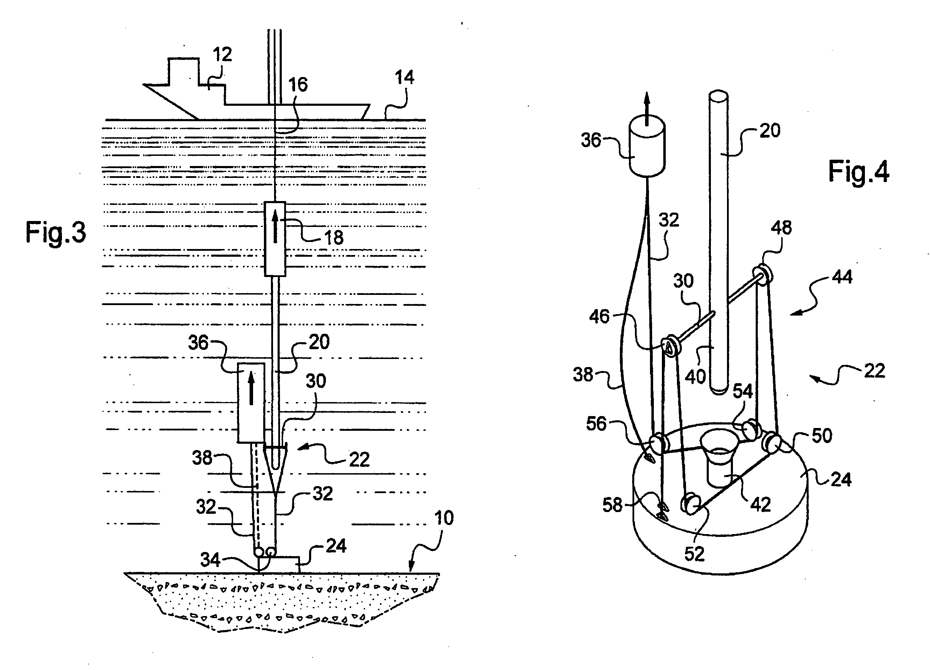

Ensuite, on déroule progressivement la ligne de suspension 16 de manière à entraîner le flotteur 18 et la conduite 20 vers l'installation de fond 24. Par là même, la ligne 38 qui relie l'installation de fond 24 et la bouée de tirage 36 se tend jusqu'à reprendre l'ensemble des efforts de traction d'environ 600000 Newton de la bouée de tirage 36 qui s'immobilise alors, comme illustré sur la Figure 3. Dès lors que la ligne 38 reprend intégralement les efforts de traction de la bouée de tirage 36, elle s'immobilise et en conséquence, la tension qui s'exerce sur le câble de suspension 16 devient alors nulle. Car en effet, le flotteur 18 qui exerce toujours une poussée ascensionnelle d'environ 800 000 Newton, reprend non seulement les efforts dus au poids de la conduite 20 et du flotteur 16 d'environ 500 000 Newton, ce qui correspond à une tension d'environ 300 000 Newton sur le câble de traction 32. Parallèlement le flotteur 18 exerce une tension d'environ 300 000 Newton sur la conduite 20 qui est en conséquence maintenue verticalement.

Ensuite, grâce à des moyens de guidage connus, on contrôle la remontée de la bouée de tirage 36 après avoir rompu la ligne 38 qui la reliait à l'installation de fonds 24.

Bien évidemment, les valeurs données pour les forces de traction sont indicatives et pourraient être différentes pour un autre dimensionnement des flotteur et bouée.

En outre, selon une variante de réalisation avantageuse de l'invention, on prévoit des organes de renvoi complémentaires solidaires d'une embase ancrée dans le fond marin et à distance de l'installation de fond. Ces éléments ne sont pas illustrés mais se conçoivent aisément au regard de la Figure 3, Par exemple, ladite embase est ancrée dans le fond marin à une distance de 50 m de l'installation de fond 24. Ainsi, la bouée de tirage 36 est alors reliée aux câbles de traction 32. Ces câbles de traction s'étendent à partir du palonnier 30 jusqu'à l'installation de fond 24 en traversant les poulies de renvoi 34 pour ensuite rejoindre les organes de renvoi complémentaires puis, la bouée de tirage 36. De la sorte, les câbles de traction 32 s'étendent d'abord sensiblement horizontalement, entre l'installation de fond 24 et les organes de renvoi complémentaires, puis verticalement entre ces organes de renvoi complémentaire et la bouée de tirage 36. Au surplus, on relie la bouée de tirage 36 avec la ligne 38 non plus à l'installation de fond 24, mais directement à l'embase précitée. De la sorte, la remontée contrôlée de la bouée de tirage 36, après la rupture de la ligne 38, et inversement, la descente du flotteur 18 et de l'extrémité de raccordement 22 vers l'installation de fond 24 s'opèrent à des distances correspondant, selon une direction horizontale, à la distance qui sépare l'installation de fonds 24 et l'embase des organes de renvoi complémentaires. De la sorte, les risques de collision entre la bouée de tirage 36 et les éléments de la conduite longitudinale 20 qui se croisent, disparaissent.

Selon un mode de mise en oeuvre de l'invention non représenté, lorsque la conduite et le flotteur sont dans une position telle que représentée sur la Figure 1, on relie l'extrémité de raccordement de la conduite à un corps mort déposé sur le fond marin, par l'intermédiaire d'un câble de raccordement.

On se reportera à présent à la Figure 4, sur laquelle on a représenté en détail l'installation de fond 24 sur laquelle est connectée l'extrémité de raccordement 22. En outre, on y retrouve le palonnier 30 et un élément mâle 40 de la conduite 20, ainsi qu'un élément femelle 42 de l'installation de fond 24. Par ailleurs, l'installation est équipée de moyens formant palan 44 pour démultiplier les efforts de traction exercés par ladite bouée de tirage 36. Ainsi, deux poulies 46, 48 coaxiales sont respectivement montées aux extrémités du palonnier 30 et deux paires de poulies 50, 52 ; 54, 56 sont installées de part et d'autre dudit élément femelle 42. De la sorte, le câble de tirage 32 est tout d'abord amarré sur l'installation de fond 24 en un point d'ancrage 58. Il est ensuite engagé dans l'une des poulies 45 des poulies coaxiales pour revenir dans l'une des paires de poulies 52, 50 puis autour de l'autre poulie coaxiale 48. Enfin, le câble est engagé dans la deuxième paires de poulies 54, 56 pour rejoindre ensuite la bouée de tirage 36.

De la sorte, on diminue les efforts à exercer sur le câble de traction par la bouée de tirage 36 pour entraîner l'extrémité de raccordement 22 de la conduite 20, vers l'installation de fond.

## Revendications

1. Méthode d'installation d'une colonne sous-marine montante pour le transport des hydrocarbures entre un fond marin (10) et une surface (14), ladite méthode étant du type selon laquelle :
- on ancre une installation de fond (24) sur ledit fond marin (10) ;
- on fournit une conduite tubulaire (20) présentant, une extrémité de raccordement (22) destinée à être raccordée à ladite installation de fond et une extrémité opposée équipée d'un flotteur immergeable (18) ;
- on autorise l'entrée d'eau à l'intérieur dudit flotteur pour immerger ledit flotteur (18) et ladite conduite tubulaire (20) à l'aplomb de ladite installation de fond (24), tandis qu'on retient ledit flotteur et ladite conduite par une ligne de suspension (16) depuis un bâtiment de surface (12), ladite ligne de suspension supportant des efforts de traction correspondant au poids dudit flotteur et de ladite conduite ;
- on fournit un câble de traction (32) et on installe des moyens de renvoi (34) sur ladite installation de fond (24) de manière à pouvoir relier ledit câble de traction à ladite extrémité de raccordement (22) et à entraîner ledit câble à travers lesdits moyens de renvoi (34) et simultanément ladite extrémité de raccordement (22) vers ladite installation de fond ;
**caractérisée en ce qu'**elle comprend en outre les étapes suivantes :
- on accroche une bouée de tirage (36) immergée audit câble de traction (32) pour exercer des efforts de traction supplémentaires sur ladite ligne de suspension (16) ;
- on substitue un fluide gazeux à l'eau dudit flotteur (18) pour compenser d'une part les efforts de traction correspondant au poids dudit flotteur et de ladite conduite et d'autre part, au moins une partie des efforts de traction supplémentaire ; et,
- on amarre ladite bouée de tirage (36) à ladite installation de fond (24) et on libère progressivement ladite ligne de suspension (16) de façon que ladite installation de fond (24) reprenne lesdits efforts de traction supplémentaires exercés par la bouée de tirage (36), tandis que ledit flotteur (18) exerce ladite autre partie des efforts supplémentaires de traction sur ladite conduite (20) pour la maintenir verticalement.

2. Méthode d'installation selon la revendication 1, **caractérisée en ce qu'**on substitue ledit fluide gazeux à l'eau dudit flotteur (18) pour compenser les efforts de traction correspondant au poids dudit flotteur et sensiblement à la moitié desdits efforts de traction supplémentaire.

3. Méthode d'installation selon la revendication 1 ou 2, **caractérisée en ce qu'**on libère ladite bouée de tirage (36) de ladite installation de fond (24) pour que ladite bouée de tirage remonte vers ladite surface de manière à entraîner à l'inverse, ladite extrémité de raccordement (22) vers ladite installation de fond.

4. Méthode d'installation selon la revendication 3, **caractérisée en ce qu'**on relie ladite bouée de tirage (36) à des moyens de guidage pour guider la remontée de ladite bouée de tirage (36) vers ladite surface.

5. Méthode d'installation selon la revendication 4, **caractérisée en ce que** lesdits moyens de guidage comprennent un treuil sous-marin.

6. Méthode d'installation selon l'une quelconque des revendications 1 à 5, **caractérisée en ce qu'**on équipe ladite extrémité de raccordement (22) d'un élément mâle (26), tandis qu'on équipe ladite installation de fond (24) d'un élément femelle (28) apte à recevoir ledit élément mâle.

7. Méthode d'installation selon l'une quelconque des revendications 1 à 6, **caractérisée en ce qu'**on autorise l'entrée d'eau à l'intérieur de ladite bouée de tirage (36) pour immerger ladite bouée de tirage et **en ce qu'**on substitue un fluide gazeux à l'eau de ladite bouée de tirage (36) pour libérer ladite bouée de tirage.

8. Méthode d'installation selon l'une quelconque des revendications 1 à 7, **caractérisée en ce qu'**on installe des moyens de renvoi (34) dudit câble formant palan sur ladite installation de fond (24).

9. Méthode d'installation selon l'une quelconque des revendications 1 à 8, **caractérisée en ce qu'**on installe des organes de renvoi complémentaires solidaires d'une embase ancrée dans le fond marin et à distance de l'installation de fond (24), et **en ce qu'**on entraîne ledit câble de traction (32) à la fois à travers lesdits moyens de renvoi (34) et à travers lesdits organes de renvoi complémentaires.

## Patentansprüche

1. Verfahren zur Installation einer Unterwasser-Steigrohrleitung für den Transport von Kohlenwasserstoffen zwischen einem Meeresboden (10) und einer Oberfläche (14), wobei das Verfahren von dem Typ ist, wonach:
- eine Bodenanlage (24) auf dem Meeresboden (10) verankert wird;
- eine Rohrleitung (20) bereitgestellt wird, die ein Verbindungsende (22) aufweist, das für die Verbindung mit der Bodenanlage bestimmt ist, und ein entgegengesetztes Ende, das mit einem eintauchbaren Schwimmer (18) versehen ist;
- der Eintritt von Wasser in das Innere des Schwimmers gestattet wird, um den Schwimmer (18) und die Rohrleitung (20) lotrecht zu der Bodenanlage (24) einzutauchen, während der Schwimmer und die Leitung durch eine Aufhängeleitung (16) von einem Oberflächengebäude (12) aus zurückgehalten werden, wobei die Aufhängeleitung Zugkräften standhält, die dem Gewicht des Schwimmers und der Leitung entsprechen;
- ein Zugseil (32) bereitgestellt wird und Umlenkmittel (34) an der Bodenanlage (24) installiert werden, damit das Zugseil mit dem Verbindungsende (22) verbunden werden kann und damit das Seil über die Umlenkmittel (34) und gleichzeitig das Verbindungsende (22) zu der Bodenanlage hin mitgenommen wird;
**dadurch gekennzeichnet, dass** es ferner die folgenden Schritte umfasst:
- eine eingetauchte Zugboje (36) wird an dem Zugseil (32) befestigt, um zusätzliche Zugkräfte auf die Aufhängeleitung (16) auszuüben;
- das Wasser des Schwimmers (18) wird durch ein gasförmiges Fluid ersetzt, um einerseits die Zugkräfte, die dem Gewicht des Schwimmers und der Leitung entsprechen, und andererseits wenigstens einen Teil der zusätzlichen Zugkräfte zu kompensieren; und
- die Zugboje (36) wird an der Bodenanlage (24) vertäut, und die Aufhängeleitung (16) wird progressiv freigegeben, so dass die Bodenanlage (24) die zusätzlichen Zugkräfte, die durch die Zugboje (36) ausgeübt werden, übernimmt, während der Schwimmer (18) den anderen Teil der zusätzlichen Zugkräfte auf die Leitung (20) ausübt, um sie vertikal zu halten.

2. Installationsverfahren nach Anspruch 1, **dadurch gekennzeichnet, dass** das Wasser des Schwimmers (18) durch das gasförmige Fluid ersetzt wird, um die Zugkräfte, die dem Gewicht des Schwimmers und der Leitung entsprechen, und im Wesentlichen die Hälfte der zusätzlichen Zugkräfte zu kompensieren.

3. Installationsverfahren nach Anspruch 1 oder 2, **dadurch gekennzeichnet, dass** die Zugboje (36) der Bodenanlage (24) freigegeben wird, damit die Zugboje zur Oberfläche aufsteigt, so dass sie umgekehrt das Verbindungsende (22) zur Bodenanlage mitnimmt.

4. Installationsverfahren nach Anspruch 3, **dadurch gekennzeichnet, dass** die Zugboje (36) mit Führungsmitteln verbunden wird, um das Aufsteigen der Zugboje (36) zur Oberfläche zu führen.

5. Installationsverfahren nach Anspruch 4, **dadurch gekennzeichnet, dass** die Führungsmittel eine Unterwasserwinde umfassen.

6. Installationsverfahren nach einem der Ansprüche 1 bis 5, **dadurch gekennzeichnet, dass** das Verbindungsende (22) mit einem Einsteckelement (26) versehen wird, während die Bodenanlage (24) mit einem Aufnahmeelement (28) zur Aufnahme des Einsteckelements versehen wird.

7. Installationsverfahren nach einem der Ansprüche 1 bis 6, **dadurch gekennzeichnet, dass** der Eintritt von Wasser in das Innere der Zugboje (36) gestattet wird, um die Zugboje einzutauchen, und dass das Wasser der Zugboje (36) durch ein gasförmiges Fluid ersetzt wird, um die Zugboje freizugeben.

8. Installationsverfahren nach einem der Ansprüche 1 bis 7, **dadurch gekennzeichnet, dass** Mittel zum Umlenken (34) des Seils zur Bildung eines Hebezugs an der Bodenanlage (24) installiert werden.

9. Installationsverfahren nach einem der Ansprüche 1 bis 8, **dadurch gekennzeichnet, dass** komplementäre Umlenkorgane installiert werden, die mit einer Basis fest verbunden sind, die in dem Meeresboden und im Abstand zu der Bodenanlage (24) verankert ist, und dass das Zugseil (32) gleichzeitig über die Umlenkmittel (34) und über die komplementären Umlenkorgane mitgenommen wird.

## Claims

1. A method of installing a subsea riser for carrying hydrocarbons between a sea bed (10) and a surface (14), said method being of the type whereby:
- a seabed installation (24) is anchored to said sea bed (10);
- a tubular pipe (20) is supplied which has a connecting end (22) intended to be connected to said seabed installation and an opposite end equipped with a submersible float (18);
- water is permitted to enter said float in order to submerge said float (18) and said tubular pipe (20) vertically in line with said seabed installation (24), while said float and said pipe are held by a suspension line (16) from a surface vessel (12), said suspension line bearing tensile forces corresponding to the weight of said float and of said pipe;
- a pulling cable (32) is supplied and return means (34) are installed on said seabed installation (24) so that said pulling cable can be connected to said connecting end (22) and said cable can be driven through said return means (34) and, at the same time, said connecting end (22) can be driven toward said seabed installation;
**characterized in that** it further comprises the following steps:
- a submerged pulling buoy (36) is attached to said pulling cable (32) so as to apply additional tensile forces to said suspension line (16);
- a gaseous fluid is substituted for the water in said float (18) in order to compensate, on the one hand, for the tensile forces corresponding to the weight of said float and of said pipe and, on the other hand, for at least some of the additional tensile forces; and
- said pulling buoy (36) is anchored to said seabed installation (24) and said suspension line (16) is gradually released so that said seabed installation (24) takes up said additional tensile forces applied by the pulling buoy (36) whereas said float (18) applies the remainder of the additional tensile forces to said pipe (20) in order to hold it vertically.

2. The method of installation as claimed in claim 1, **characterized in that** said gaseous fluid is substituted for the water in said float (18) in order to compensate for the tensile forces corresponding to the weight of said float and substantially to half said additional tensile forces.

3. The method of installation as claimed in claim 1 or 2, **characterized in that** said pulling buoy (36) is released from said seabed installation (24) so that said pulling buoy rises up toward said surface in such a way as to drive said connecting end (22) in the opposite direction, toward said seabed installation.

4. The method of installation as claimed in claim 3, **characterized in that** said pulling buoy (36) is connected to guide means to guide the ascent of said pulling buoy (36) toward said surface.

5. The method of installation as claimed in claim 4, **characterized in that** said guide means comprise a subsea hoist.

6. The method of installation as claimed in any one of claims 1 to 5, **characterized in that** said connecting end (22) is equipped with a male element (26), whereas said seabed installation (24) is equipped with a female element (28) able to accept said male element.

7. The method of installation as claimed in any one of claims 1 to 6, **characterized in that** water is permitted to enter said pulling buoy (36) in order to submerge said pulling buoy, and **in that** a gaseous fluid is substituted for the water in said pulling buoy (36) in order to release said pulling buoy.

8. The method of installation as claimed in any one of claims 1 to 7, **characterized in that** cable return means (34) that form a block and tackle are installed on said seabed installation (24).

9. The method of installation as claimed in any one of claims 1 to 8, **characterized in that** additional return members secured to a baseplate anchored in the sea bed and some distance from the seabed installation (24) are installed, and **in that** said pulling cable (32) is driven both through said return means (34) and through said additional return members.
